(19) Europäisches Patentamt
European Patent Office
Office européen des brevets

(11) Veröffentlichungsnummer: **0 518 121 A2**

(12) **EUROPÄISCHE PATENTANMELDUNG**

(21) Anmeldenummer: **92108886.0**

(22) Anmeldetag: **27.05.92**

(51) Int. Cl.[5]: **C08L 23/10**, //(C08L23/10, 23:16,C08K3:34),(C08L23/10, 23:16,C08K5:00)

(30) Priorität: **12.06.91 DE 4119282**

(43) Veröffentlichungstag der Anmeldung: **16.12.92 Patentblatt 92/51**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Schwager, Harald, Dr.**
**Ziegelofenweg 7**
**W-6720 Speyer(DE)**
Erfinder: **Hungenberg, Klaus-Dieter, Dr.**
**Ortsstrasse 135**
**W-6943 Birkenau(DE)**

(54) **Propylenpolymerisate mit Nukleirungsmitteln.**

(57) Propylenpolymerisate, enthaltend

a) ein Propylencopolymerisat aus
85 bis 99 Gew.-% eines Propylenpolymerisats mit 0 bis 2 Gew.-% weiterer, einpolymerisierter $C_2$-$C_{10}$-Alk-1-ene und
1 bis 15 Gew.-% eines Propylen-Ethylen-Copolymerisats mit einem Ethylengehalt von 5 bis 95 Gew.-%, sowie
b) ein Nukleierungsmittel,
wobei pro 100 Gew.-Teile des Propylencopolymerisats a) 0,01 bis 2 Gew.-Teile des Nukleierungsmittels b) eingesetzt werden.

Die erfindungsgemäßen Propylenpolymerisate zeichnen sich insbesondere durch eine verbesserte Schlagzähigkeit bei hoher Steifigkeit aus.

EP 0 518 121 A2

Die vorliegende Erfindung betrifft Propylenpolymerisate, enthaltend

a) ein Propylencopolymerisat aus

85 bis 99 Gew.-% eines Propylenpolymerisats mit 0 bis 2 Gew.-% weiterer, einpolymerisierter $C_2$-$C_{10}$-Alk-1-ene und

1 bis 15 Gew.-% eines Propylen-Ethylen-Copolymerisats mit einem Ethylengehalt von 5 bis 95 Gew.-%, sowie

b) ein Nukleierungsmittel,

wobei pro 100 Gew.-Teile des Propylencopolymerisats a) 0,01 bis 2 Gew.-Teile des Nukleierungsmittels b) eingesetzt werden.

Außerdem betrifft die vorliegende Erfindung ein Verfahren zur Herstellung dieser Propylenpolymerisate, sowie Folien und Formkörper aus diesen Propylenpolymerisaten.

Durch Polymerisation an Ziegler-Natta-Katalysatoren erhältliche Propylenpolymerisate sind bereits in einer Reihe von Patentschriften beschrieben worden. Aus der USA-A 4 260 710 ist bekannt, Homo- und Copolymerisate von $\alpha$-Olefinen durch Polymerisation mit Hilfe von Ziegler-Natta-Katalysatoren in einem Rührkessel herzustellen. Die dabei verwendeten Katalysatorkomponenten enthalten u.a. Verbindungen des mehrwertigen Titans, Aluminiumhalogenide und/oder -alkyle, sowie Elektronendonorverbindungen, wobei meistens Silane, Ester, Ether, Ketone oder Lactone verwendet werden (EP-B 14 523, EP-B 45 977, EP-B 86 473, EP-A 171 200, US-A 4 857 613).

Des weiteren sind eine Reihe von Verfahren zur Darstellung von Propylen-Ethylen-Copolymeren mit Hilfe eines Ziegler-Natta-Katalysatorsystems bekannt (US-A 4 454 299, US-A 4 455 405, ZA-B 0084/3561, ZA-B 0084/3563, ZA-B 0084/5261, GB-B 1 032 945, EP-A 355 603), bei denen man zunächst gasförmiges Propylen in einer ersten Reaktionsstufe polymerisiert und das daraus erhältliche Homopolymerisat anschließend in eine Zweite Reaktionsstufe bringt, wo ein Gemisch aus Ethylen und Propylen hinzupolymerisiert wird. Das Verfahren wird gewöhnlich bei erhöhtem Druck und in Anwesenheit von Wasserstoff als Molmassenregler durchgeführt. Durch das Hinzupolymerisieren eines Gemisches aus Propylen und Ethylen zum Propylenhomopolymerisat werden dessen Eigenschaften deutlich verändert, da sich Copolymerisate und Homopolymerisate in Bezug auf Festigkeit und Beständigkeit teilweise erheblich unterscheiden. Die dabei erhältlichen Polymergemische weisen meist eine ausgezeichnete Schlagzähigkeit, zugleich aber auch eine im Vergleich zu reinem Polypropylen deutlich verminderte Steifigkeit auf. Für einige Anwendungsbereiche werden aber vorwiegend Copolymerisate benötigt, welche neben einer für praktische Zwecke ausreichend guten Schlagzähigkeit auch eine hohe Steifigkeit aufweisen. Außerdem enthalten die Copolymerisate oft noch Katalysatorreste, insbesondere Titan und Chlor, was ihre Anwendbarkeit u.a. im Lebensmittel- und Hygienebereich einschränkt.

Eine weitere Möglichkeit, die Eigenschaften von Polyolefinen gezielt verändern zu können, besteht darin, diese mit Additiven zu versetzen. Als Additive finden dabei insbesondere Lichtstabilisatoren, Gleitmittel, Viskositätsverbesserer, UV-Absorber, Radikalfänger und Nukleierungsmittel Verwendung, wobei unter letzteren Stoffe zu verstehen sind, welche die Keimbildung bei der Kristallisation aus der Schmelze beschleunigen, wodurch sich die Kristallinität der Polyolefine verbessern läßt (K. Stoeckhert "Kunststoff-Lexikon", 7. Auflage, Carl Hanser Verlag, München-Wien, 1981). Aus der US-A 4 016 118 ist in diesem Zusammenhang bekannt, Polyolefine mit 0,1 bis 0,7 Gew.-% Dibenzylidensorbitol zu versetzen, um auf diese Weise die optischen Eigenschaften der Polyolefine, insbesondere deren Transparenz zu verbessern. Aus dieser Patentschrift geht jedoch nicht hervor, wie Polyolefine mit einer verbesserten Schlagzähigkeit bei gleichbleibend hoher Steifigkeit hergestellt werden können.

Der vorliegenden Erfindung lag daher die Aufgabe zugrunde, diesen Nachteilen abzuhelfen und Propylenpolymerisate mit verbesserter Schlagzähigkeit bei möglichst hoher Steifigkeit zu entwickeln.

Demgemäß wurden die eingangs definierten neuen Propylenpolymerisate gefunden.

Die erfindungsgemäßen Propylenpolymerisate enthalten ein Propylencopolymerisat a), welches aus 85 bis 99 Gew.-% eines Propylenpolymerisats mit 0 bis 2 Gew.-% weiterer, einpolymerisierter $C_2$-$C_{10}$-Alk-1-ene und 1 bis 15 Gew.-% eines Propylen-Ethylen-Copolymerisats mit einem Ethylengehalt von 5 bis 95 Gew.-% besteht. Vorzugsweise wird dabei ein solches Propylen-copolymerisat a) verwendet, welches aus 88 bis 97 Gew.-% eines Propylenpolymerisats mit 0 bis 1 Gew.-% weiterer, einpolymerisierter $C_2$-$C_{10}$-Alk-1-ene und 3 bis 12 Gew.-% eines Propylen-Ethylen-Copolymerisats mit einem Ethylengehalt von 5 bis 95 Gew.-%, insbesondere von 10 bis 90 Gew.-%, besteht. Unter einpolymerisierten $C_2$-$C_{10}$-Alk-1-enen versteht man dabei insbesondere Ethylen, But-1-en, Pent-1-en und Hex-1-en, wobei bevorzugt Ethylen und But-1-en eingesetzt werden. Für die erfindungsgemäßen Propylenpolymerisate eignet sich insbesondere auch ein solches Propylencopolymerisat a), bei dem das Propylenpolymerisat keine weiteren, einpolymerisierten $C_2$-$C_{10}$-Alk-1-ene enthält, so daß dieses als Propylenhomopolymerisat bezeichnet werden kann.

Die Herstellung dieser, in den erfindungsgemäßen Propylenpolymerisaten enthaltenden Propylencopolymerisate a) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man meistens eine Reihe von hintereinander geschalteten Rührkesseln einsetzt. Die Reaktoren enthalten ein Festbett aus feinteiligem Polymerisat, welches üblicherweise durch Rühren in Bewegung gehalten wird. Das Herstellungsverfahren kann in Lösung, in einer Aufschlämmung oder in der Gasphase durchgeführt werden, wobei die Gasphasen-Polymerisation bevorzugt ist.

Weiterhin kann das Herstellungsverfahren mit den in der Polymerisationstechnik üblichen Ziegler-Natta-Katalysatoren durchgeführt werden. Diese enthalten u.a. neben einer titanhaltigen Feststoffkomponente noch einen Cokatalysator. Als Cokatalysator kommt dabei eine Aluminiumverbindung in Frage. Vorzugsweise wird neben dieser Aluminiumverbindung als weiterer Bestandteil des Cokatalysators noch eine Elektronendonorverbindung eingesetzt.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel $SiO_2 \cdot aAl_2O_3$, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 $cm^3/g$, insbesondere von 1,0 bis 5,0 $cm^3/g$ und eine spezifische Oberfläche von 10 bis 1000 $m^2/g$, insbesondere von 100 bis 500 $m^2/g$ auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesinmdi-($C_1$-$C_{10}$-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel I

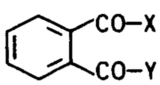

I

verwendet, wobei X und Y jeweils für ein Chloratom oder einen $C_1$- bis $C_{10}$-Alkoxyrest oder gemeinsam für Sauerstoff stehen. Besonders bevorzugte Elektronendonorverbindungen sind Phthalsäureester, wobei X und Y einen $C_1$-$C_8$-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. $C_1$- bis $C_{15}$-Alkanole, $C_5$- bis $C_7$-Cycloalkanole, die ihrerseits $C_1$- bis $C_{10}$-Alkylgruppen tragen können, ferner $C_6$- bis $C_{10}$-Phenole.

Die titanhaltige Feststoffkomponente kann nach an sich bekannten Methoden hergestellt werden. Beispiele dafür sind u.a. in der EP-A 45 975, der EP-A 45 977, der EP-A 86 473, der EP-A 171 200, der GB-A 2 111 066 und der US-A 4 857 613 beschrieben.

Bei der Herstellung der titanhaltigen Feststoffkomponente wird bevorzugt folgendes dreistufige Verfahren angewandt:

In der ersten Stufe versetzt man zunächst einen feinteiligen Träger, bevorzugt Siliciumdioxid oder $SiO_2 \cdot aAl_2O_3$ - wobei a für eine Zahl im Bereich von 0,001 bis 2, insbesondere im Bereich von 0,01 bis 0,5 steht - mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff

im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein $C_1$- bis $C_8$-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150 °C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150 °C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit einem Cokatalysator als Ziegler-Natta-Katalysatorsystem verwendet. Als Cokatalysator kommen dabei Aluminiumverbindungen in Frage.

Als Cokatalysator geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische Verbindungen der allgemeinen Formel II

$R^1_nSi(OR^2)_{4-n}$ II

wobei

$R^1$ gleich oder verschieden ist und eine $C_1$- bis $C_{20}$-Alkylgruppe, eine 5- bis 7-gliedrige Cycloalkylgruppe, die ihrerseits eine $C_1$- bis $C_{10}$-Alkylgruppe tragen kann, oder eine $C_6$- bis $C_{20}$-Aryl- oder Arylalkylgruppe bedeutet, $R^2$ gleich oder verschieden ist und eine $C_1$- bis $C_{20}$-Alkylgruppe bedeutet und n für die Zahlen 1, 2 oder 3 steht. Besonders bevorzugt werden dabei solche Verbindungen, in denen $R^1$ eine $C_1$- bis $C_8$-Alkylgruppe oder eine 5- bis 7-gliedrige Cycloalkylgruppe, sowie $R^2$ eine $C_1$- bis $C_4$-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 10:1 bis 800:1, insbesondere 20:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die einzelnen Katalysatorbestandteile können in beliebiger Reihenfolge einzeln oder als Gemisch zweier Komponenten in das Polymerisationssystem eingebracht werden.

Die Herstellung der in den erfindungsgemäßen Propylenpolymerisaten enthaltenden Propylencopolymerisate a) erfolgt üblicherweise nach einem zweistufigen Verfahren, wobei in einer ersten Polymerisationsstufe Propylen, gegebenenfalls in Anwesenheit weiterer $C_2$-$C_{10}$-Alk-1-ene, polymerisiert wird und anschließend in einer zweiten Polymerisationsstufe dem aus der ersten Polymerisationsstufe ausgetragenen Polymerisat ein Gemisch aus Propylen und Ethylen hinzupolymerisiert wird.

Die Polymerisation des Propylens wird in der ersten Polymerisationsstufe bei einem Druck von 20 bis 40 bar, einer mittleren Verweilzeit des Reaktionsgemisches von 1 bis 5 Stunden und einer Temperatur von 60 bis 90 °C durchgeführt. Bevorzugt sind dabei Drücke von 20 bis 35 bar, mittlere Verweilzeiten von 1,5 bis 4 Stunden und Temperaturen von 65 bis 85 °C. In einer bevorzugten Verfahrensweise wählt man die

Reaktionsbedingungen so, daß in der ersten Polymerisationsstufe pro mmol der Aluminiumkomponente 0,05 bis 2 kg, insbesondere 0,1 bis 1,5 kg, Polypropylen gebildet werden.

Das Monomergemisch kann neben dem Propylen noch in geringem Umfang weitere $C_2$-$C_{10}$-Alk-1-ene, insbesondere Ethylen, But-1-en, Pent-1-en oder Hex-1-en enthalten. In diesem Fall wird das Verhältnis zwischen dem Partialdruck des Propylens und dem des $C_2$-$C_{10}$-Alk-1-ens üblicherweise auf 20:1 bis 500:1, insbesondere auf 50:1 bis 200:1 eingestellt. Vorzugsweise wird jedoch in der ersten Polymerisationsstufe auf die Mitverwendung von weiteren $C_2$-$C_{10}$-Alk-1-enen ganz verzichtet.

Das gebildete Propylenpolymerisat wird mit dem Katalysator aus der ersten Polymerisationsstufe ausgetragen und in die zweite Polymerisationsstufe übergeführt, wo diesem ein Gemisch aus Propylen und Ethylen hinzupolymerisiert wird. Der in der zweiten Polymerisationsstufe vorherrschende Druck liegt 7 bar, bevorzugt 10 bar, unter dem der ersten Polymerisationsstufe und beträgt 5 bis 30, vorzugsweise 10 bis 25 bar. Die Temperatur wird in der zweiten Polymerisationsstufe auf 40 bis 100 ° C, vorzugweise auf 50 bis 90 ° C eingestellt, die mittleren Verweilzeiten liegen dabei im Bereich von 1 bis 5 Stunden, insbesondere im Bereich von 1,5 bis 4 Stunden.

Das Verhältnis der Partialdrücke Zwischen Propylen und Ethylen liegt in den bei der Herstellung derartiger Copolymerisate üblichen Bereichen, bevorzugt im Bereich von 0,05:1 bis 20:1, insbesondere im Bereich von 0,1:1 bis 15:1. Neben Propylen und Ethylen können in der zweiten Polymerisationsstufe noch geringe Mengen von $C_4$-$C_{10}$-Alk-1-enen, beispielsweise von But-1-en, Pent-1-en oder Hex-1-en mitpolymerisiert werden, wobei in diesem Fall das Verhältnis der Partialdrücke zwischen diesen $C_4$-$C_{10}$-Alk-1-enen und dem Propylen nicht mehr als 1:100, insbesondere nicht mehr als 0,5:100, beträgt. Das Gewichtsverhältnis zwischen den in der ersten und den in der zweiten Polymerisationsstufe umgesetzten Monomeren wird üblicherweise so eingestellt, daß in der ersten Polymerisationsstufe mehr Monomer umgesetzt wird. Vorzugsweise wird das Gewichtsverhältnis zwischen den in der ersten und den in der zweiten Polymerisationsstufe umgesetzten Monomeren so bemessen, daß es in einem Bereich von 5:1 bis 100:1, insbesondere im Bereich von etwa 6:1 bis 50:1, liegt.

Weiterhin besteht noch die Möglichkeit, in das Reaktionsgemisch der zweiten Polymerisationsstufe ein $C_1$- bis $C_8$-Alkanol, insbesondere ein $C_1$-$C_4$-Alkanol, einzubringen, welches die Aktivität des Ziegler-Natta-Katalysators beeinflußt. Dafür gut geeignete Alkanole sind u.a. Methanol, Ethanol, n-Propanol, n-Butanol und insbesondere Isopropanol. Die Menge des hinzugefügten $C_1$-$C_8$-Alkanols sollte in diesem Fall zweckmäßigerweise so bemessen werden, daß das Molverhältnis zwischen der Aluminiumverbindung und dem $C_1$-$C_8$-Alkanol 0,1:1 bis 10:1, insbesondere 0,2:1 bis 5:1 beträgt.

Das Molekulargewicht der dabei erhältlichen Polymerisate kann wie üblich durch Zugabe von Reglern, insbesondere von Wasserstoff kontrolliert werden.

Die auf diese Weise erhältlichen Propylencopolymerisate a) werden in den erfindungsgemäßen Propylenpolymerisaten zusammen mit einem Nukleierungsmittel b), verwendet, welches definitionsgemäß die Keimbildung bei der Kristallisation aus der Schmelze beschleunigt. Als Nukleierungsmittel werden dabei die in der Kunststofftechnik üblicherweise eingesetzten Nukleierungsmittel verwendet, beispielsweise mineralische Zusatzstoffe wie Talkum, Kieselsäure oder Kaolin, oder organische Verbindungen wie Mono- und Polycarbonsäuren sowie deren Salze, oder Polymerisate wie Ethylen-Acrylester-Copolymerisate.

Besonders bevorzugte Nukleierungsmittel sind dabei insbesondere Dibenzylidensorbitol und dessen $C_1$-$C_8$-alkylsubstituierte Derivate, beispielsweise Methyldibenzylidensorbitol, ferner Feintalkum, sowie Salze von Diestern der Phosphorsäure, beispielsweise die Natriumsalze der folgenden Verbindungen der Formeln III und IV,

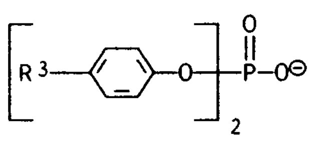

III

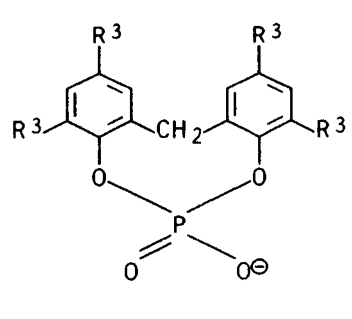

IV

wobei $R^3$ für eine verzweigte $C_3$-$C_8$-Alkylgruppe, insbesondere für eine tert. Butyl-, tert. Pentyl- oder eine

tert. Hexylgruppe steht.

In den erfindungsgemäßen Propylenpolymerisaten werden das Propylencopolymerisat a) und das Nukleierungsmittel b) in solchen Mengenverhältnissen verwendet, daß pro 100 Gew.-Teile des Propylencopolymerisats a) 0,01 bis 2 Gew.-Teile, insbesondere 0,05 bis 1,5 Gew.-Teile des Nukleierungsmittels b), eingesetzt werden.

Die Herstellung der erfindungsgemäßen Propylenpolymerisate erfolgt durch Zumischen des jeweils verwendeten Nukleierungsmittels b) zu den Propylencopolymerisaten a) in den in der Kunststoffverarbeitung üblicherweise zur Mischung von Stoffen eingesetzten Apparaturen beispielsweise in Trommelmischern, in Mühlen, in Schnecken- oder Scheibenextrudern, in Walzwerken oder Knetern. Das Propylencopolymerisat a) und das Nukleierungsmittel b) werden in der Mischapparatur üblicherweise bei einer Temperatur von 150 bis 250 °C, insbesondere von 180 bis 240 °C, miteinander vermischt. Der Mischungsvorgang erfolgt dabei in der Regel bei Drücken von 1 bis 100 bar und mittleren Verweilzeiten von 0,5 bis 60 Minuten. Die genauen Werte für den Druck und die mittlere Verweilzeit sind von den jeweils eingesetzten Mischapparaturen abhängig.

Die erfindungsgemäßen Propylenpolymerisate zeichnen sich u.a. durch eine hohe Schlagzähigkeit und eine hohe Steifigkeit aus. Sie sind nach einem verfahrenstechnisch wenig aufwendigen Herstellungsverfahren durch einfaches Zumischen eines Nukleierungsmittels b) erhältlich und eignen sich insbesondere zur Herstellung von Folien und Formkörpern.

## Beispiele

### Beispiele 1 bis 4 und Vergleichsbeispiel A

#### A. Herstellung der Propylencopolymerisate

Die Herstellung der Propylencopolymerisate erfolgte in zwei hintereinander geschalteten Rührautoklaven mit einem Nutzvolumen von jeweils 200 l in Anwesenheit von Wasserstoff als Molekulargewichtsregler. Beide Reaktoren enthielten ein bewegtes Festbett aus feinteiligem Polypropylen.

In den ersten Polymerisationsreaktor wurde bei einem Druck von 32 bar und einer Temperatur von 80 °C gasförmiges Propylen eingeleitet und dieses kontinuierlich mit Hilfe eines Ziegler-Natta-Katalysators polymerisiert. Dabei wurden pro Stunde 1 g einer titanhaltigen Feststoffkomponente, 60 mmol Triethylaluminium und 6 mmol Dimethoxyisobutylisopropylsilan als Katalysatorbestandteile verwendet. Die mittlere Verweilzeit des Reaktionsgemisches betrug ca. 2 Stunden. Bei diesem Verfahren wurden pro mmol der Aluminiumverbindung 3 kg Polypropylen erzeugt. Die titanhaltige Feststoffkomponente wurde nach folgendem Verfahren hergestellt.

Dazu versetzte man in einer ersten Stufe $SiO_2$, welches einen Teilchendurchmesser von 20 bis 45 $\mu$m, ein Porenvolumen von 1,75 $cm^3/g$ und eine Oberfläche von 320 $m^2/g$ aufwies, mit in n-Heptan gelöstem Butyl-octylmagnesium, wobei pro Mol $SiO_2$ 0,3 mol der Magnesiumverbindung eingesetzt wurden. Die Lösung wurde 1,5 Stunden lang bei 90 °C gerührt, danach auf 20 °C abgekühlt, und anschließend wurde die 10-fache molare Menge, bezogen auf die magnesiumorganische Verbindung, an Chlorwasserstoff eingeleitet. Nach 30 Minuten trennte man das festphasige Produkt vom Lösungsmittel ab.

Das aus der ersten Stufe erhältliche Produkt wurde mit n-Heptan versetzt und anschließend wurden unter ständigem Rühren 3 mol Ethanol, bezogen auf 1 mol Magnesium hinzugefügt. Dieses Gemisch wurde 1,5 Stunden bei 80 °C gerührt und danach mit 6 mol Titantetrachlorid und 0,5 mol Phthalsäure-di-n-butylester, jeweils bezogen auf 1 mol Magnesium, versetzt. Das Reaktionsgemisch wurde weitere zwei Stunden gerührt, wonach der Feststoff vom Lösungsmittel durch Filtration abgetrennt wurde.

Das so erhaltene Produkt extrahierte man zwei Stunden lang bei 125 °C mit einer 15 gewichtsprozentigen Lösung von Titantetrachlorid in Ethylbenzol.

Danach wurde das Festprodukt durch Filtration vom Extraktionsmittel getrennt und solange mit n-Heptan gewaschen, bis dieses nur mehr 0,3 Gew.-% Titantetrachorid enthielt.

Die daraus resultierende titanhaltige Feststoffkomponente enthielt 3,1 Gew.-% Titan, 7,5 Gew.-% Magnesium und 28,3 Gew.-% Chlor.

Das im ersten Reaktor gebildete Polypropylen wurde zusammen mit dem Katalysator in den zweiten Rührautoklaven übergeführt und dort wurde dem Polymerisat bei einem Gesamtdruck von 15 bar und einer mittleren Verweilzeit von 2 Stunden ein Gemisch aus Propylen und Ethylen in Anwesenheit von Isopropanol hinzupolymerisiert.

Die in der zweiten Polymerisationsstufe eingestellten Temperaturen können zusammen mit dem Molverhältnis zwischen der Aluminiumkomponente und dem Isopropanol, dem Partialdruckverhältnis zwischen Propylen und Ethylen und dem Gewichtsverhältnis zwischen dem in der ersten und dem in der zweiten Polymerisationsstufe umgesetzten Monomeren der nachfolgenden Tabelle 1 entnommen werden.

Beim Vergleichsbeispiel A wurde unter ansonsten gleichen Bedingungen wie in den Beispielen 1 bis 4 lediglich Propylen in der ersten Stufe polymerisiert.

Der Schmelzflußindex, die Steifigkeit, die Schlagzähigkeit und die Katalysatorrückstände der dabei erhaltenen Propylencopolymerisate sind für die Beispiele 1 bis 4 und das Vergleichsbeispiel A in der nachfolgenden Tabelle 2 aufgeführt.

Tabelle 1

Reaktionsbedingungen bei der Herstellung der Propylencopolymerisate

| | Beispiel 1 | Beispiel 2 | Beispiel 3 | Beispiel 4 | Vergleichsbeispiel A |
|---|---|---|---|---|---|
| Temperatur in der zweiten Stufe [°C] | 60 | 60 | 60 | 70 | - |
| Molverhältnis Aluminiumkomponente: Isopropanol in der zweiten Stufe | 0,8 | 0,75 | 0,71 | 0,6 | - |
| Partialdruckverhältnis Propylen: Ethylen | 1,9/1 | 1,9/1 | 1,9/1 | 1,9/1 | - |
| Gewichtsverhältnis zwischen den in der ersten und in der zweiten Stufe umgesetzten Monomeren | 9,5/1 | 12,5/1 | 15,5/1 | 13,3/1 | - |

Tabelle 2

Eigenschaften der erhaltenen Propylencopolymerisate

| | | Beispiel 1 | Beispiel 2 | Beispiel 3 | Beispiel 4 | Vergleichsbeispiel A |
|---|---|---|---|---|---|---|
| Schmelzindex[a] | [g/10 min] | 3,2 | 3,4 | 4,4 | 10,9 | 4,0 |
| Steifigkeit[b] | [N/mm²] | 640 | 670 | 700 | 700 | 790 |
| Schlagzähigkeit[c] | [kJ/m²] | 70 | 57 | 38 | 44 | 9 |
| Katalysatorrückstände | | | | | | |
| Chlor | [ppm] | <13 | <13 | <13 | <13 | <15 |
| Titan | [ppm] | < 2 | < 2 | < 2 | < 2 | < 2 |

a) bei 230°C und 2,16 kg, nach DIN 53 735
b) nach DIN 53 445
c) nach DIN 53 453, bei -20°C

B. Vermischen mit dem Nukleierungsmittel

Die in den Beispielen 1 bis 4 und dem Vergleichsbeispiel A hergestellten Polymerisate wurden anschließend in einem Zweischneckenextruder der Firma Werner & Pfleiderer ("ZSK 30" bzw. "ZSK 40") bei einer Temperatur von 220 ° C, einem Druck von 5 bar und einer mittleren Verweilzeit von 1,5 Minuten mit einem Nukleierungsmittel versetzt. Die dabei verwendeten Polymerisate wurden als Grieß oder als Granulat in den Zweischneckenextruder eingeführt. Als Nukleierungsmittel wurden Dibenzylidensorbitol (im folgenden kurz "I" benannt"), Feintalkum ("II"), das Natriumsalz der Verbindung mit der Formel III, (Seite 8) ("III") und das Natriumsalz der Verbindung mit der Formel IV (Seite 8) ("IV") eingesetzt, wobei $R^3$ in beiden Fällen jeweils für eine tert.-Butylgruppe steht. Die in den einzelnen Versuchen jeweils verwendeten Nukleierungsmittel können mit den jeweiligen Mengenangaben der nachfolgenden Tabelle 3 entnommen werden.

Die Steifigkeit und die Schlagzähigkeit der auf diese Weise erhaltenen nukleierten Polymerisate sind in der nachfolgenden Tabelle 3 aufgeführt.

Tabelle 3

Eigenschaften der nukleierten Polymerisate

| Beispiele | verwendetes Polymerisat aus Beispiel | Nukleierungsmittel Art | Nukleierungsmittel Menge [Gew.-%] | Steifigkeit[a] [N/mm2] | Schlagzähigkeit[b] [kJ/m2] |
|---|---|---|---|---|---|
| 1/1 | 1 | I | 0,4 | 770 | 71 |
| 1/2 | 1 | II | 0,4 | 690 | 72 |
| 1/3 | 1 | III | 0,2 | 790 | 74 |
| 2/1 | 2 | I | 0,4 | 785 | 58 |
| 2/2 | 2 | II | 0,4 | 710 | 57 |
| 2/3 | 2 | IV | 0,2 | 800 | 60 |
| 3/1 | 3 | I | 0,4 | 820 | 39 |
| 3/2 | 3 | III | 0,2 | 840 | 38 |
| 4/1 | 4 | I | 0,4 | 830 | 46 |
| 4/2 | 4 | II | 0,4 | 770 | 43 |
| A | A | - | - | 790 | 9 |

a) nach DIN 53 445

b) nach DIN 53 453, bei -20°C

Aus den Beispielen wird ersichtlich, daß die erfindungsgemäßen nukleierten Propylencopolymerisate im Vergleich zu den nicht nukleierten Propylencopolymerisaten bei gleichbleibend hoher, teilweise noch leicht erhöhter Schlagzähigkeit eine verbesserte Steifigkeit aufweisen.

Außerdem wird aus dem Vergleich der Beispiele mit dem Vergleichsbeispiel A deutlich, daß die erfindungsgemäßen nukleierten Propylencopolymerisate bei vergleichbarer hoher Steifigkeit über eine

deutlich höhere Schlagzähigkeit verfügen.

**Patentansprüche**

**1.** Propylenpolymerisate, enthaltend
a) ein Propylencopolymerisat aus

85 bis 99 Gew.-% eines Propylenpolymerisats mit 0 bis 2 Gew.-% weiterer, einpolymerisierter $C_2$-$C_{10}$-Alk-1-ene und

1 bis 15 Gew.-% eines Propylen-Ethylen-Copolymerisats mit einem Ethylengehalt von 5 bis 95 Gew.-%, sowie
b) ein Nukleierungsmittel,

wobei pro 100 Gew.-Teile des Propylencopolymerisats a) 0,01 bis 2 Gew.-Teile des Nukleierungsmittels b) eingesetzt werden.

**2.** Propylenpolymerisate nach Anspruch 1, wobei das Propylencopolymerisat a) aus

88 bis 97 Gew.-% eines Propylenpolymerisats mit 0 bis 1 Gew.-% weiterer, einpolymerisierter $C_2$-$C_{10}$-Alk-1-ene und

3 bis 12 Gew.-% eines Propylen-Ethylen-Copolymerisats mit einem Ethylengehalt von 5 bis 95 Gew.-% besteht.

**3.** Propylenpolymerisate nach den Ansprüchen 1 oder 2, wobei das Propylencopolymerisat a) ein Propylenhomopolymerisat enthält.

**4.** Propylenpolymerisate nach den Ansprüchen 1 bis 3, wobei das Propylencopolymerisat a) ein Propylen-Ethylen-Copolymerisat mit einem Ethylengehalt von 10 bis 90 Gew.-% enthält.

**5.** Propylenpolymerisate nach den Ansprüchen 1 bis 4, wobei als Nukleierungsmittel b) Dibenzylidensorbitol, $C_1$-$C_8$-alkylsubstituiertes Dibenzylidensorbitol, Feintalkum oder Salze von Diestern der Phosphorsäure verwendet werden.

**6.** Propylenpolymerisate nach den Ansprüchen 1 bis 5, wobei pro 100 Gew.-Teile des Propylencopolymerisats a) 0,05 bis 1,5 Gew.-Teile des Nukleierungsmittels b) verwendet werden.

**7.** Verfahren zur Herstellung von Propylenpolymerisaten gemäß den Ansprüchen 1 bis 6, dadurch gekennzeichnet, daß man das Propylencopolymerisat a) und das Nukleierungsmittel b) in einer Mischapparatur bei einer Temperatur von 150 bis 250 °C miteinander vereinigt.

**8.** Folien und Formkörper aus den Propylenpolymerisaten nach den Ansprüchen 1 bis 6.